# FASCICULE DE BREVET EUROPEEN

(11) **EP 0 968 323 B1**
(45) Date de publication et mention de la délivrance du brevet: **16.05.2001**
(21) Numéro de dépôt: 98910813.9
(22) Date de dépôt: 04.03.1998
(51) Int. Cl.: C23F 11/10, E21B 41/02

(54) **COMPOSITIONS A BASE DE SELS DE MERCAPTOACIDES ET D'IMIDAZOLINES COMME INHIBITEURS DE LA CORROSION CARBONIQUE DU FER ET DES METAUX FERREUX**
ZUSAMMENSETZUNGEN AUF DER BASIS VON SALZEN VON MERCAPTOSÄUREN UND IMIDAZOLINEN ALS KOHLENSÄURE-KORROSIONSINHIBITOREN FÜR EISEN UND EISENLEGIERUNGEN
COMPOSITIONS BASED ON SALTS OF MERCAPTO ACIDS AND IMIDAZOLINES AS INHIBITORS OF CARBONIC CORROSION OF IRON AND FERROUS METALS

(30) Priorité: 18.03.1997 FR 9703286; 03.02.1998 FR 9801226
(43) Date de publication de la demande: 05.01.2000
(73) Titulaire: CECA S.A., 92800 Puteaux (FR)
(72) Inventeur: POU, Tong, Eak, F-95800 Courdimanche (FR); FOUQUAY, Stéphane, F-76130 Mont Saint-Aignan (FR)
(74) Mandataire: Ohresser, François
(86) Numéro de dépôt international: FR9800351
(87) Numéro de publication internationale: WO9841673

(56) Documents cités:
- GB-A- 2 319 530
- SU-A- 732 258
- US-A- 2 865 817
- US-A- 3 300 333
- US-A- 3 629 104
- US-A- 3 775 320
- US-A- 4 339 349
- DATABASE WPI Section Ch, Week 8051 Derwent Publications Ltd., London, GB; Class C02, AN 80-91773C XP002048705 & SU 732 258 A (ZHUKOV I N) , 8 mai 1980

## Description

### DOMAINE TECHNIQUE

L'invention a trait à l'inhibition de la corrosion du fer et des métaux ferreux dans les saumures carboniques. Par saumures carboniques, on entend au sens de l'invention, des solutions aqueuses de sels minéraux chargées en dioxyde de carbone.

### ART ANTERIEUR

Les poly(éthylèneamino)-1 alkyl-2 diazolines-1,3 (encore dénommées alkyl(C₁₀-C₂₂)-poly(éthylèneamino)-imidazolines), sont connues pour être d'excellents inhibiteurs de la corrosion du fer et des métaux ferreux dans les saumures sulfhydriques, ou sulfhydriques et carboniques, et de nombreux ouvrages ont été consacrés au mécanisme de cette inhibition. Pour ne citer que les plus récents : Preparation of Corrosion Inhibitor for Water Flooding in Oilfield and Study of its Mechanism, Lu Zhu et coll., Water Treatments, 8 (1993), 253-264, China Ocean Press ou Hydrogen Sulphide Corrosion of Steel, Mechanism of Action of Imidazoline Inhibitors, A.J. Szyprowski, Proceedings of the 8th European Symposium on Corrosion Inhibitors, Ann. Univ. Ferrara, N.S., Sez. V, suppi. N.10, 1995. Mais curieusement, ces composés sont très peu efficaces dans les milieux corrosifs ne contenant que du CO₂, pourtant apparemment moins agressifs, ce qui a motivé la recherche des structures voisines plus complexes comme les imidazolines N,N' substituées (US 5,322,640) ou les adducts d'imidazolinones et d'urée (GB 2.190.670).

### EXPOSE DE L'INVENTION

Les sels de mercaptoacides et de poly(éthylèneamino)-1 alkyl-2 diazolines-1,3 (d'alkyl-polyéthylèneamino-imidazolines) sont de très puissants inhibiteurs de corrosion du fer et des métaux ferreux par les solutions aqueuses de sels minéraux chargées en dioxyde de carbone.

La présente invention consiste en des compositions inhibitrices de corrosion comportant au moins une poly(éthylèneamino)-1 alkyl-2 diazoline-1,3 répondant à la formule générale 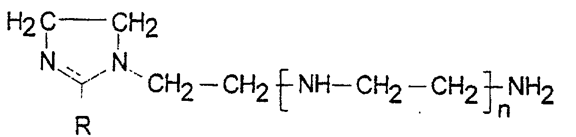 dans laquelle R est une chaîne hydrocarbonée linéaire ou ramifiée, saturée ou insaturée comportant 10 à 22 atomes de carbone, et où n est un nombre de 0 à 3, et au moins un mercaptoacide répondant à la formule générale 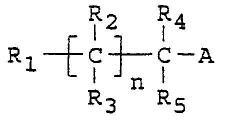 avec
n = 0 à 3,
R₁=H ou SH,
R₂ et R₃, ensemble ou indépendamment = C₁₋₄, CON(R₆)(R₇), COOR₈,
R₄ et R₅, ensemble ou indépendamment = OH, NH₂, ou SH quand R₁≠SH,
R₆ et R₇, ensemble ou indépendamment = H, C₁₋₄,
R₈ = H, C₁₋₈,
R₂ à R₅ pouvant être inclus dans un cycle aliphatique,
R₃ et R₅ pouvant être inclus dans un cycle aromatique lorsque n=1,
A étant un groupe acide COOH, SO₃H, OSO₃H, PO₃H ou OPO₃H,
le rapport molaire entre le ou les composants mercaptoacides et le ou les composants imidazolines étant de 1,0 à 1,5.

Les alkyldiazolines entrant dans la composition des inhibiteurs de l'invention sont les produits de condensation avec cyclisation d'acides gras, saturés ou insaturés, à 10-22 atomes de carbones, avec des polyéthylènes-polyamines (diéthylène triamine DETA et ses homologues supérieurs, triéthylène tétramine TETA, tétraéthylène pentamine TEPA, pentaéthylène hexamine PEHA). Ces diazolines s'obtiennent dans des conditions bien connues de l'homme du métier (introduction de la polyamine dans l'acide gras fondu, en présence d'acide oxalique agissant comme accélérateur de cyclisation, montée en température jusqu'à 200°C - 220°C et maintien en palier jusqu'au départ total de l'eau de condensation).

Les mercaptoacides préférés sont les acides mercaptocarboxyliques,

HS-(CH₂)ₙ-COOH,

et parmi ceux-ci l'acide mercaptoacétique,

HS-CH₂-COOH

et l'acide mercaptopropionique

HS-CH₂-CH₂-COOH.

De telles compositions inhibent la corrosion statique du fer et des métaux ferreux dans des saumures carboniques à forte salinité à forte température, et on en a proposé jadis (US-A-2,865,817) pour la réduction de la corrosion des matériels d'extinction du coke. Elles inhibent aussi la corrosion dynamique dans les conditions de production de gaz, et leur efficacité se maintient dans les milieux biphasiques que sont les saumures carboniques / huiles. Toutefois, pour améliorer leurs performances lorsque la phase hydrocarbonée est un pétrole brut et lorsque la phase aqueuse est très salée, c'est-à-dire que sa concentration en sel est supérieure à 1 g/l, on les associe à des tensioactifs cationiques, amphotères et non ioniques du groupe constitué par des sels d'alkyltriméthyl- ou alkyldiméthylbenzyl-ammonium, des acides alkylaminopropioniques et des alkylamines oxyéthylées, dans lesquels la chaîne alkyle est une chaîne saturée ou insaturée comportant de 12 à 22 atomes de carbone. Cet effet est inattendu ; il n'est pas impossible qu'il soit dû à l'amélioration du partage du système mercaptocarboxylate / imidazoline entre la phase huileuse et la phase aqueuse. Ces compositions sont l'objet de la présente invention, et précisément les compositions mercaptocarboxylates / diazolines / tensioactifs comprenant typiquement 20 à 40 % de mercaptocarboxylate de diazoline 2 à 5 % d'ammonium quaternaire, 2 à 5 % d'amphotère, et 2 à 10 d'amine oxyéthylénée Les compositions selon l'invention sont avantageusement présentées sous forme de solutions aqueuses à 10 % - 75 % de matière active. On préfère les solutions à 20-40% en poids dans l'eau ou dans un mélange d'eau et d'un solvant miscible à l'eau, l'isobutanol, le butylglycol, le monoéthylèneglycol ou leurs mélanges étant des solvants préférés. Elles se préparent très simplement par mélange à froid ou à tiède des constituants. On les utilise à des concentrations efficaces 5 à 200 ppm, préférentiellement à environ 20 ppm de la préparation (calculées en composant mercaptocarboxylate de diazoline par rapport au milieu corrosif).
Les exemples qui suivent feront mieux comprendre l'invention.

### EXEMPLES

### EXEMPLE 1 : Préparation de compositions inhibitrices mercaptoacides / diazolines.

On réalise diverses diazolines en condensant 1 mole d'acide gras avec 1,15 mole de tétraéthylènepentamine (TEPA) en présence de 1% en poids d'acide oxalique bihydraté. L'amine est introduite dans le mélange acide gras, acide oxalique à la température de 140°C, après quoi le mélange réactionnel est porté à 160°C et maintenu à cette température durant 1h30, puis porté entre 200°C - 220°C pendant 16 h. Les compositions inhibitrices sont constituées de diazoline (30 % en poids), d'acide thioglycolique (5 % en poids) et d'isobutanol (65 % en poids). Les témoins correspondants sont constitués de diazolines, d'acide acétique glacial, et d'isobutanol dans les mêmes proportions.

On réalise ainsi les compositions inhibitrices I1, I2, I3, et I4, respectivement avec des diazoline obtenues à partir de tall-oil, d'acide gras de coprah, d'acide gras d'oléique et d'huile de colza, et les compositions témoins (acétiques) T1 à T4 correspondantes.

Toutes ces compositions sont des liquides homogènes d'aspect huileux.

### EXEMPLE 2

On effectue des mesures de corrosion statique dans un milieu constitué d'une solution aqueuse contenant, en grammes par litre :

| | |
|---|---|
| NaCl | 277,50 |
| KCl | 6,43 |
| CaCl₂, 2H₂O | 21,50 |
| MgCl₂, 6H₂O | 33,77 |
| BaCl₂, 2 H₂O | 0,20 |
| SrCl₂, 2H₂O | 0,34 |
| FeCl₂ | 0,06 |

Ce milieu est préalable désaéré à l'azote, puis saturé en CO₂. Son pH est de 5,5.

L'essai de corrosion est effectué sur une éprouvette de 1 cm2 en acier XC18, dans un dispositif de mesure de résistance de polarisation, le milieu corrosif étant à 80°C, la pression de CO₂ étant de 1 bar. Les résultats sont rapportés dans le tableau ci-après, où ils sont exprimés, comme il est traditionnel, en pourcentage de protection.

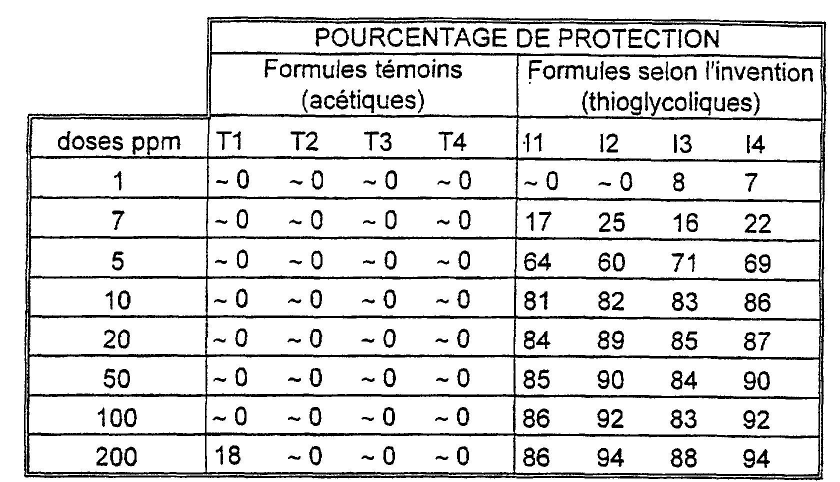

Ces résultats traduisent sans équivoque l'efficacité des compositions diazolines / acide thioglycolique.

### EXEMPLE 3 : test de corrosion dynamique

Le test simule des conditions de production de gaz. Le milieu corrosif est constitué par une solution aqueuse de NaCI à 1 g/l, préalablement désaérée par de l'azote, puis saturée de CO2, portée à 60°C et circulant à la vitesse de 13 mètres par seconde dans un dispositif dit "Jet Impingement" (voir : Correlation of Steel Corrosion in Pipe Flow with Jet Impingement and Rotating Cylinder Test, K.D. Efird et all., Corrosion, vol. 49, n°12, p. 992 - 1993). Le corps d'épreuve soumis à corrosion dans ces conditions est une éprouvette en acier XC18 en forme d'anneau de largeur égale à 1 mm et de rayon interne égal à 2,5 mm, dont on mesure la vitesse de corrosion par résistance de polarisation.

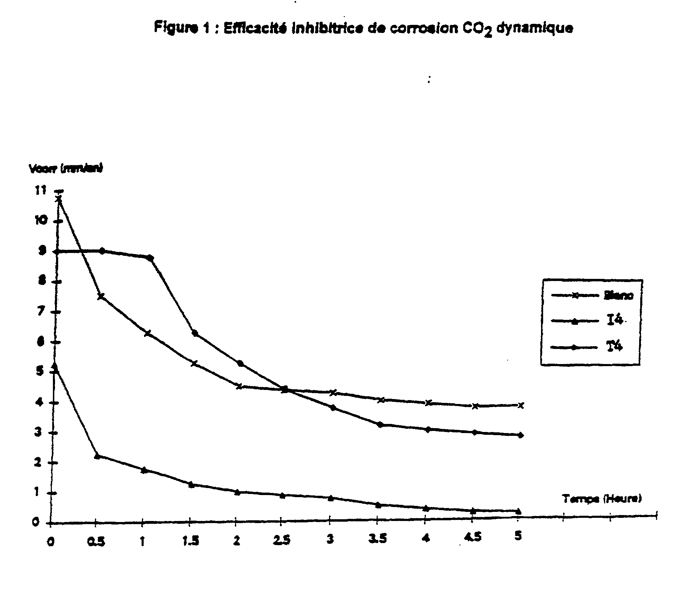

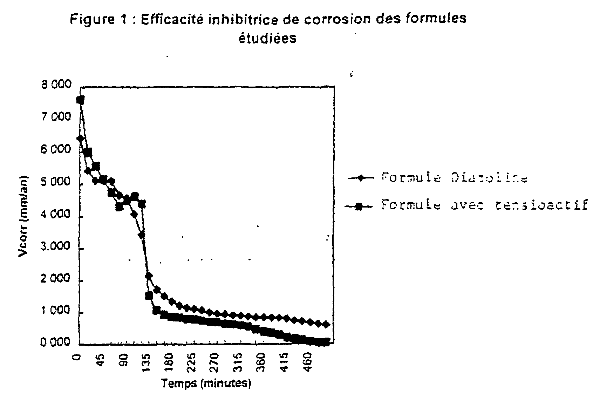

La figure 1 reproduit les résultats obtenus d'un essai à blanc (sans inhibiteur) et en présence des compositions T4 et I4 (respectivement les formulations à base d'acétate et de thioglycolate de diazoline de colza). Les compositions inhibitrices ont été utilisées à la dose de 20 ppm (exprimée en volumes de préparation par rapport au milieu corrosif). Ces résultats témoignent sans ambiguïté de l'efficacité de l'inhibiteur dans les conditions de corrosion par saumure carbonique animée d'une forte vitesse d'écoulement.

### EXEMPLE 4 : Test de corrosion en milieu biphasique

Le milieu corrosif est une phase mixte constituée à 90 % en volume d'une solution aqueuse de chlorure de sodium à 1 g/l et de 10% d'huile paraffinique. Le système est préalablement désaéré par barbotage d'azote, puis saturé de CO₂. Le température de travail est de 60°C. L'homogénéité du milieu est assurée dans le montage à l'aide d'une agitation magnétique faible.

L'inhibiteur de corrosion utilisé est la composition I4 (à base d'imidazoline de colza). Il est utilisé à la dose de 20 ppm (calculée en volume de préparation inhibitrice par rapport au volume total du milieu corrosif). La vitesse de corrosion est estimée comme dans les exemples précédents par résistance de polarisation, dans un processus d'essai résumé ci-après.

| Conditions | Vitesse de corrosion dans la phase aqueuse (en mm/an) |
|---|---|
| A. Précorrosion en phase aqueuse Après précorrosion pendant 12 heures | 1,5 mm/an |
| B. Introduction de l'huile Après 2 heures de stabilisation | 1,4 mm/an |
| C. Introduction de l'inhibiteur via la phase huile Après 12 heures de stabilisation | 0,002 mm/an |

### EXEMPLE 5 : milieu biphasique brut pétrolier / saumure très saline

Le test de corrosion est mené dans un milieu corrosif constitué de 10 % d'un pétrole brut gabonais prélevé sur site et 90 % d'eau de site reconstituée avec la composition suivante :

| | |
|---|---|
| SrCl₂, 6H₂O | 0,34 g/l |
| BaCl₂, 2H₂O | 0,2 g/l |
| MgCl₂, 6H₂O | 33,77 g/l |
| KCI | 6,43 g/l |
| CaCl₂, 2H₂O | 21,5 g/l |
| FeCl₂, 4H₂O | 0,06 g/l |
| NaCI | 277,5 g/l |

Au moment l'essai, on ajoute 1,8 g/l d'acide acétique et on acidifie par un acide fort (HCI) pour atteindre un pH de 5,5. On désaère à l'azote pendant une heure, puis on sature en CO₂ pendant une heure. On ajoute 0,05 g/l de NaHCO₃, on remet en route le barbotage de CO₂ et on monte la température à 80°C, ce qui prend environ 1/2 heure.

La vitesse de corrosion de l'acier dans la saumure est mesurée par résistance de polarisation, une mesure répétée tous les 1/4 d'heure pendant une heure. On ajoute alors du brut pétrole gabonais (10 % par rapport à la saumure) préalablement saturé en CO₂ et porté à 80°, et on continue à suivre la vitesse de corrosion par mesure de résistance de polarisation tous les 1/4 d'heure pendant encore une heure. On ajoute alors 20 ppm d'inhibiteur de corrosion (compté en mercaptocarboxylate de diazoline et on suit l'évolution de la vitesse de corrosion par mesure de résistance de polarisation effectuée tous les 1/4 d'heure pendant quatre heures.

On compare une composition inhibitrice simple constituée (pour-cent en poids) de :

| | |
|---|---|
| Diazoline | 25 |
| Acide mercaptoacétique | 5 |
| Butylglycol | 25 |
| Monoéthylèneglycol | 25 |
| Eau | 20 |

à une composition inhibitrice selon l'invention améliorée par addition de tensioactifs comme exposé plus haut, constituée (pour-cent en poids) de :

| | |
|---|---|
| Diazoline | 20 |
| Acide mercaptopropionique | 5 |
| Monopropylèneglycol | 60 |
| Chlorure de coprah diméthylbenzylammonium à 50% | 5% |
| Coprah-monoamine à 11 oxydes d'éthylène | 5% |
| Acide coprah aminopropionique à 60% | 5% |

Dans ces compositions, la diazoline est celle de l'exemple 1. Le chlorure de coprah diméthylbenzylammonium utilisé est le Noramium®DA50 de CECA S.A. qui est une présentation à 50% de matière active, la coprah-monoamine oxyéthylénée est le produit oxyéthyléné à en moyenne 11 molécules d'oxyde d'éthylène, commercialisé par CECA S.A. sous le nom de Noramox®C11, et l'acide coprah aminopropionique est l'Amphoram®CP1 de CECA S.A., qui est une présentation commerciale à 60 % de matière active.

Les variations de la vitesse de corrosion en fonction du temps en présence de 20 ppm respectivement de la première et de la seconde formulation sont représentées sur la figure 2. On observe que les valeurs de la vitesse de corrosion résiduelle après 8 heures 30 de contact s'établissent respectivement à 0,60 mm/an et à 0,035 mm/an, ce qui témoigne de l'efficacité réelle de la seconde formulation, dans les conditions de l'essai.

## Revendications

1. Composition inhibitrices de la corrosion du fer et des métaux ferreux dans les saumures carboniques, comportant :
- au moins une poly(éthylèneamino)-1 alkyl-2 diazoline-1,3 répondant à la formule générale 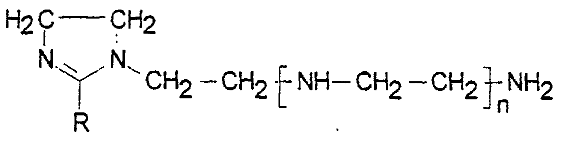 dans laquelle R est une chaîne hydrocarbonée linéaire ou ramifiée, saturée ou insaturée comportant 10 à 22 atomes de carbone, et où n est un nombre de 0 à 3,
- au moins un mercaptoacide répondant à la formule générale 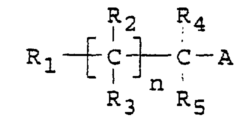 avec
n = 0 à 3,
R₁=H ou SH,
R₂ et R₃, ensemble ou indépendamment = C₁₋₄, CON(R₆)(R₇), COOR₈,
R₄ et R₅, ensemble ou indépendamment = OH, NH₂, ou SH quand R₁≠SH,
R₆ et R₇, ensemble ou indépendamment = H, C₁₋₄,
R₈=H, C₁₋₈,
R₂ à R₅ pouvant être inclus dans un cycle aliphatique,
R₃ et R₅ pouvant être inclus dans un cycle aromatique lorsque n=1,
A étant un groupe acide COOH, SO₃H, OSO₃H, PO₃H ou OPO₃H,
le rapport molaire entre le ou les composants mercaptoacides et le ou les composants diazolines étant de 1,0 à 1,5, et
- au moins un tensioactif cationique du type sel d'alkyltriméthyl- ou d'alkyldiméthylbenzyl-ammonium, un amphotère du type acide alkylaminopropionique et un non ionique du type alkylamine oxyéthylénée, dans lesquels la chaîne alkyle est une chaîne saturée ou insaturée comportant de 12 à 22 atomes de carbone.

2. Composition inhibitrice selon la revendication 1, dans lesquelles le mercaptoacide est un acide mercaptocarboxylique.

3. Composition inhibitrice selon la revendication 1, dans lesquelles le mercaptoacide est l'acide mercaptoacétique ou l'acide mercaptopropionique.

4. Composition inhibitrice selon la revendication 1, comportant de 20 à 40% de mercaptocarboxylates de poly(éthylèneamino)-1 alkyl-2 diazoline-1,3, 2 à 5 % d'ammonium quaternaire, 2 à 5 % d'amphotère, et 2 à 10 d'amine oxyéthylénée, en solution dans un solvant aqueux ou miscible à l'eau.

5. Compositions inhibitrices selon la revendication 4, dans laquelle le solvant miscible à l'eau est l'isobutanol, le butylglycol, le monoéthylèneglycol ou un mélange de ces solvants.

6. Procédé pour inhiber la corrosion du fer et des métaux ferreux dans les saumures carboniques, en présence d'huiles, au repos ou animées d'une forte vitesse d'écoulement, consistant à introduire dans le milieu corrosif une composition inhibitrice correspondant à l'une ou l'autre des revendications 1 à 5, à raison de 5 à 200 ppm, exprimés en poids des principes actifs, mercaptoacides + poly(éthylèneamino)-1 alkyl-2 diazoline-1,3, par rapport au volume du milieu corrosif.

## Claims

1. Composition for inhibiting the corrosion of iron and ferrous metals in carbonic brines, containing:
- at least one 1-poly(ethyleneamino)-2-alkyl-1,3-diazoline, corresponding to the general formula 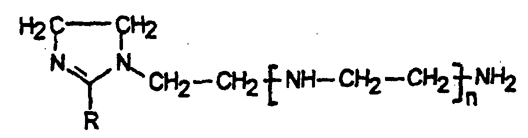 in which R is a linear or branched, saturated or unsaturated hydrocarbon chain containing 10 to 22 carbon atoms, and in which n is a number from 0 to 3,
- at least one mercapto acid corresponding to the general formula 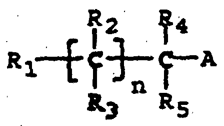 with
n = 0 to 3,
R₁ = H or SH,
R₂ and R₃, together or independently, = C₁₋₄, CON(R₆) (R₇) or COOR₈,
R₄ and R₅, together or independently, = OH, NH₂ or SH when R₁ ≠ SH,
R₆ and R₇, together or independently, = H or C₁₋₄,
R₈ = H or C₁₋₈,
it being possible for R₂ to R₅ to be included in an aliphatic ring,
it being possible for R₃ and R₅ to be included in an aromatic ring when n = 1,
A being a COOH, SO₃H, OSO₃H, PO₃H or OPO₃H acid group,
the molar ratio between the mercapto acid component(s) and the diazoline component(s) being from 1.0 to 1.5, and
- at least one cationic surfactant of the alkyltrimethyl- or alkyldimethylbenzylammonium salt type, an amphoteric surfactant of the alkylaminopropionic acid type and a nonionic surfactant of the oxyethylenated alkylamine type, in which the alkyl chain is a saturated or unsaturated chain containing from 12 to 22 carbon atoms.

2. Inhibitory composition according to Claim 1, in which the mercapto acid is a mercaptocarboxylic acid.

3. Inhibitory composition according to Claim 1, in which the mercapto acid is mercaptoacetic acid or mercaptopropionic acid.

4. Inhibitory composition according to Claim 1, containing from 20 to 40% 1-poly(ethyleneamino)-2-alkyl-1,3-diazoline mercaptocarboxylates, 2 to 5% quaternary ammonium, 2 to 5% amphoteric surfactant and 2 to 10% oxyethylenated amine, dissolved in an aqueous or water-miscible solvent.

5. Inhibitory compositions according to Claim 4, in which the water-miscible solvent is isobutanol, butyl glycol, monoethylene glycol or a mixture of these solvents.

6. Process for inhibiting corrosion of iron and ferrous metals in carbonic brines, in the presence of oils, at rest or animated with a high flow rate, which consists in introducing into the corrosive medium an inhibitory composition corresponding to one or other of Claims 1 to 5, in a proportion of 5 to 200 ppm, expressed as weight of the active principles, mercapto acids and 1-poly(ethyleneamino)-2-alkyl-1,3-diazoline, relative to the volume of the corrosive medium.

## Patentansprüche

1. Zusammensetzung, die die Korrosion von Eisen und eisenhaltiger Metalle in kohlensäurehaltigen Salzlösungen hemmt und die enthält:
- mindestens ein 1-Poly(ethylenamino)-2-alkyl-1,3-diazolin der allgemeinen Formel 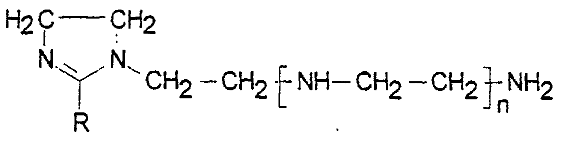 in der bedeuten:
• R eine geradkettige oder verzweigte, gesättigte oder ungesättigte Kohlenwasserstoffkette, die 10 bis 22 Kohlenstoffatome aufweist
• n eine Zahl im Bereich von 0 bis 3,
- mindestens eine Mercaptosäure der allgemeinen Formel 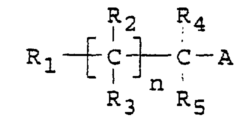 in der bedeuten:
• n eine Zahl im Bereich von 0 bis 3,
• R₁ Wasserstoff oder -SH,
• R₂ und R₃ zusammen oder unabhängig C₁-C₄, CON(R₆)(R₇), COOR₈,
• R₄ und R₅ zusammen oder unabhängig -OH, -NH₂, oder -SH, wenn R₁ ≠ -SH,
• R₆ und R₇ zusammen oder unabhängig Wasserstoff, C₁-C₄,
• R₈ Wasserstoff, C₁-C₈,
wobei die Reste R₂ bis R₅ Bestandteil eines aliphatischen Rings sein können und die Reste R₃ bis R₅ Bestandteil eines aromatischen Rings sein können, wenn n gleich 1 ist,
• A eine Säuregruppe -COOH, -SO₃H, -OSO₃H, -PO₃H oder -OPO₃H, wobei das Molverhältnis der Mercaptosäure(n) zu dem oder den Diazolinen im Bereich von 1,0 bis 1,5 liegt, und
- mindestens einen kationischen grenzflächenaktiven Stoff vom Typ der Alkyltrimethyl- oder Alkyldimethylbenzylammoniumsalze, mindestens einen amphoteren grenzflächenaktiven Stoff vom Typ der Alkylaminopropionsäuren und mindestens einen nichtionischen grenzflächenaktiven Stoff vom Typ der ethoxylierten Alkylamine, deren Alkylkette eine gesättigte oder ungesättigte Kette ist, die 12 bis 22 Kohlenstoffatome aufweist.

2. Korrosionshemmende Zusammensetzung nach Anspruch 1, wobei die Mercaptosäure eine Mercaptocarbonsäure ist.

3. Korrosionshemmende Zusammensetzung nach Anspruch 1, wobei die Mercaptosäure die Mercaptoessigsäure oder die Mercaptopropionsäure ist.

4. Korrosionshemmende Zusammensetzung nach Anspruch 1, die 20 bis 40 % Mercaptocarboxylate von 1-Poly(ethylenamino)-2-alkyl-1,3-diazolin, 2 bis 5 % quartäres Ammoniumsalz, 2 bis 5 % amphoteren grenzflächenaktiven Stoff und 2 bis 10 % ethoxyliertes Amin als Lösung in einem wäßrigen oder mit-Wasser mischbaren Lösemittel enthält.

5. Korrosionshemmende Zusammensetzung nach Anspruch 4, wobei es sich bei dem mit Wasser mischbaren Lösemittel um Isobutanol, Butylglykol, Monoethylenglykol oder ein Gemisch dieser Lösemittel enthält.

6. Verfahren zur Hemmung der Korrosion von Eisen oder eisenhaltiger Metalle in kohlensäurenhaltigen Salzlösungen in Gegenwart von Ölen, die sich in Ruhe befinden oder mit einer hohen Strömungsgeschwindigkeit bewegen, das darin besteht, in das korrodierend wirkende Medium eine korrosionshemmende Zusammensetzung nach einem der Ansprüche 1 bis 5 in einem Anteil von 5 bis 200 ppm, ausgedrückt als Gewicht an Wirkstoffen, Mercaptosäuren und 1-Poly(ethylenamino)-2-alkyl-1,3-diazolin, bezogen auf das Volumen des korrodierend wirkenden Mediums, zu geben.
